# EUROPÄISCHE PATENTANMELDUNG

(11) **EP 4 700 343 A1**
(43) Veröffentlichungstag der Anmeldung: **25.02.2026**
(21) Anmeldenummer: 25195854.2
(22) Anmeldetag: 14.08.2025
(51) Int. Cl.: G01H 9/00

(54) **VERFAHREN UND VORRICHTUNG ZUR BERÜHRUNGSLOSEN SCHWINGUNGSMESSUNG**

(30) Priorität: 23.08.2024 DE 102024124236
(71) Anmelder: Polytec GmbH, 76337 Waldbronn (DE)
(72) Erfinder: Schüssler, Matthias, 76337 Waldbronn (DE); Bernd, Armbruster, 76137 Karlsruhe (DE); Jörg, Sauer, 49078 Osnabrück (DE)
(74) Vertreter: LBP Lemcke, Brommer & Partner Patentanwälte mbB

(57) **Zusammenfassung**

Die Erfindung betrifft ein Verfahren und eine Vorrichtung zur berührungslosen Schwingungsmessung eines Objektes 1, mit einer um eine Drehachse 7 drehbaren Drehvorrichtung 4 zum Positionieren des Objekts 1, mit einem Laserinterferometer 2, dessen Messstrahl 13 mittels einer Strahlrichteinheit 22 in seiner Richtung veränderbar ist, und mit einer Auswerteeinheit 16, um die Messpunkte 14 festzulegen, die Schwingungsdaten aus dem Laserinterferometer 2 den Messpunkten 14 zuzuordnen und die Schwingungsdaten auszuwerten, wobei die Auswerteeinheit 16 mit einer Steuereinheit 12 zusammenwirkt, um den Messstrahl 13 mittels der Strahlrichteinheit 22 sukzessive auf eine Mehrzahl von vorab festgelegten Messpunkten 14 auf dem Objekt 1 zu richten. Die Steuereinheit 12 ist außerdem dazu ausgebildet, die Drehvorrichtung 4 mindestens einmal um einen vorgegebenen Drehwinkel φ motorisch um die Drehachse 7 zu drehen, oder eine solche Drehung durch Winkelmessung zu erfassen, wonach sie den mindestens einen Messstrahl 13 wiederum sukzessive auf eine Mehrzahl von vorab festgelegten Messpunkten 14 auf dem Objekt 1 richtet. Eine Ausgabeeinheit 17 gibt schließlich die ausgewerteten Schwingungsdaten in Korrelation zu den Messpunkten 14 vorzugsweise in einem objektbezogenen Koordinatensystem 19 aus. Vor der Messung wird ein räumlicher Bezug zwischen dem Laserinterferometer 2, der Drehachse 7 und dem Objekt 1 hergestellt.

## Beschreibung

Die Erfindung betrifft ein Verfahren zur berührungslosen Schwingungsmessung eines Objektes mit den Merkmalen des Oberbegriffs des Anspruchs 1 sowie eine Vorrichtung zur berührungslosen Schwingungsmessung nach dem Oberbegriff des Anspruchs 8.

Das erfindungsgemäße Verfahren betrifft demnach ein Verfahren, bei dem zunächst ein Objekt auf einer Halterung positioniert und eine Mehrzahl von Messpunkten auf dem Objekt festgelegt wird. Es wird mindestens ein Laserinterferometer verwendet, wobei ein solches Laserinterferometer einen Messkopf oder auch mehrere Messköpfe enthalten kann, um entweder nur einen Messstrahl oder gleichzeitig mehrere Messstrahlen vorzugsweise drei Messstrahlen aus unterschiedlichen Raumrichtungen, auf die Messpunkte zu richten. Mittels jeweils einer Strahlrichteinheit pro Messkopf kann der Messstrahl oder können die mehreren Messstrahlen des Laserinterferometers in seiner bzw. in ihrer Richtung verändert werden, um einen Abtastvorgang durchzuführen, ohne das Laserinterferometer in seiner Lage zu verändern. "Lage" bedeutet im Rahmen der vorliegenden Erfindung Position und Orientierung im Raum.

Durch sukzessives Richten des Messstrahls bzw. der mehreren Messstrahlen auf die Messpunkte mittels der Strahlrichteinheit bzw. mittels der mehreren Strahlrichteinheiten können Schwingungsdaten an den Messpunkten erfasst werden, und zwar durch Überlagerung des vom Objekt zurückreflektierten oder zurückgestrahlten Messstrahls mit einem Referenzstrahl des Laserinterferometers, wobei jeder Messstrahl mit einem eigenen Referenzstrahl des jeweiligen Messkopfs überlagert wird, soweit mehrere Messköpfe vorhanden sind. Die Schwingungsdaten werden anschließend ausgewertet und den Messpunkten zugeordnet, und die ausgewerteten Schwingungsdaten werden in Korrelation zu den Messpunkten ausgegeben, vorzugsweise in einem objektbezogenen Koordinatensystem, so dass die Mehrzahl der Messpunkte und die den einzelnen Messpunkten zugeordneten Schwingungsdaten auf einer Darstellung des Objekts mittels eines CAD-Modells oder eines digitalen Bildes möglich ist.

Die erfindungsgemäße Vorrichtung betrifft laut dem Oberbegriff des Anspruchs 8 eine Vorrichtung, die sich insbesondere zur Durchführung des erfindungsgemäßen Verfahrens eignet und eine Halterung zum Positionieren des Objekts umfasst, sowie mindestens ein Laserinterferometer mit einem oder mehreren Messköpfen, dessen Messstrahlen mittels jeweils einer Strahlrichteinheit in ihrer Richtung veränderbar sind und hierdurch auch relativ zum Objekt verlagert und/oder in ihrer Raumrichtung verändert werden. Durch Überlagerung des von einem Messpunkt auf dem Objekt zurückreflektierten oder zurückgestreuten Messstrahls mit einem Referenzstrahl können pro Messkopf im Laserinterferometer Schwingungsdaten an diesem Messpunkt in der Raumrichtung erfasst werden, die der Richtung des jeweiligen Laserstrahls entspricht. Eine Auswerteeinheit legt die Messpunkte fest, ordnet die Schwingungsdaten aus dem Laserinterferometer den Messpunkten zu und wertet die Schwingungsdaten aus. Die Auswerteeinheit wirkt mit einer Steuereinheit zusammen, die den Messstrahl oder die mehreren Messstrahlen mittels einer bzw. mehrerer Strahlrichteinheiten sukzessive auf eine Mehrzahl von festgelegten Messpunkten auf dem Objekt richtet. Eine Ausgabeeinheit gibt schließlich die ausgewerteten Schwingungsdaten in Korrelation zu den Messpunkten aus, und zwar wiederum vorzugsweise in einem objektbezogenen Koordinatensystem.

Verfahren und Vorrichtungen dieser Art ersetzen seit geraumer Zeit das herkömmliche Messen von Schwingungen und insbesondere Vibrationen eines Objektes, bei dem an der Oberfläche des zu vermessenden Objektes an bestimmten Messpunkte Beschleunigungssensoren angebracht werden. Denn Beschleunigungssensoren verändern in aller Regel das Schwingungsverhalten der Objektoberfläche; außerdem ist das Anbringen und Entfernen von Beschleunigungssensoren zeitraubend und arbeitsintensiv.

Ein optisches Verfahren zum Erfassen von Schwingungen des Objekts vermeidet diese Nachteile naturgemäß. Hierzu wird ein Laserinterferometer, normalerweise ein Laser-Doppler-Vibrometer eingesetzt, mit dem jeder Messpunkt auf dem Objekt mit kohärentem Laserlicht beleuchtet wird. Die Schwingungsbewegung der Objektoberfläche bewirkt eine Dopplerverschiebung der Frequenz des von der Oberfläche reflektierten oder zurückgestreuten Lichts. Eine Analyse der Frequenzverschiebung liefert die gewünschten Schwingungsdaten, da aus der Frequenzverschiebung die jeweiligen Geschwindigkeitswerte in Richtung des Messstrahls, und aus deren Verlauf auch die Beschleunigungswerte am Messpunkt berechnet werden können. Ein Beispiel für ein solches optisches Verfahren ist in der EP 1 431 740 A1 beschrieben.

Ein Verfahren und eine Vorrichtung der eingangs genannten Art, mit den Merkmalen der Oberbegriffe der Ansprüche 1 und 17, ist außerdem aus der DE 10 2007 023 826 A1 bekannt.

In der EP 1 431 740 A1 wird vorgeschlagen, ein Laserinterferometer in verschiedene Messlagen zu bringen, um ein Objekt aus mehreren Raumrichtungen vermessen zu können. "Messlage" bezeichnet hierbei die Position und die Orientierung des Laserinterferometers im Raum. Beim Bewegen des Laserinterferometers in die verschiedenen Messlagen wird ein vorgewählter fester Abstand zum Objekt eingehalten. Hier ist es außerdem notwendig, das Laserinterferometer für jeden Messpunkt auf dem Objekt in eine neue Messlage zu verfahren, was naturgemäß einen entsprechenden Zeitaufwand für die Vermessung des Objekts bedingt.

In der DE 10 2007 023 826 A1 wird ein Abgleich einer Lage des Laserinterferometers mittels zumindest einer Lage eines bekannten, frei vorgebbaren Punktes auf dem Objekt vorgenommen und eine Transformationsvorschrift zur Ermittlung der Lage des Laserinterferometers relativ zum Objekt für beliebige Messlagen anhand des Abgleichs erstellt. Im Allgemeinen sind hierzu zumindest drei bekannte Punkte auf dem Objekt notwendig, um die Lage des Laserinterferometers im Bezugssystem des Objektes zu ermitteln, da insgesamt sechs Freiheitsgrade, also drei Freiheitsgrade für die Position und drei Freiheitsgrade für die Orientierung des Laserinterferometers bestimmt werden müssen. Für den Abgleich wird dann der jeweilige Abstand zwischen der Position des Laserinterferometers und des jeweiligen bekannten Punktes sowie zwei Winkel der Orientierung des Messstrahls des Laserinterferometers gemessen bzw. aus der Strahlrichteinheit ermittelt. Wenn vier bekannte Punkte auf dem Objekt vorhanden sind, kann sich die Messung des Abstands zwischen den Punkten und dem Laserinterferometer auch erübrigen.

In beiden Dokumenten zum Stand der Technik wird vorzugsweise ein Industrieroboterarm als bewegliche Halterung des Laserinterferometers verwendet; dieser bietet eine große Flexibilität bei der Positionierung des Laserinterferometers sowie die Möglichkeit, die Lage des Laserinterferometers vorzugeben oder zumindest aus der Steuerung des Industrieroboterarms auszulesen.

Die Verwendung eines Industrieroboters bedingt allerdings die Einhaltung von spezifischen Arbeitssicherheitsmaßnahmen, wie Sicherheitsabsperrungen und Qualifikationsanforderungen an das Personal.

Ausgehend von diesem Stand der Technik liegt der Erfindung die Aufgabe zugrunde, die voranstehend beschriebenen, bekannten Verfahren und Vorrichtungen zur berührungslosen Schwingungsmessung zu vereinfachen und die Durchführung der Messung zu beschleunigen.

Gelöst ist diese Aufgabe durch ein Verfahren mit den Merkmalen des Anspruchs 1 sowie durch eine Vorrichtung mit den Merkmalen des Anspruchs 8.

Bevorzugte Weiterbildungen des erfindungsgemäßen Verfahrens finden sich in den Ansprüchen 2 bis 7; vorteilhafte Ausgestaltungen der erfindungsgemäßen Vorrichtung sind in den Ansprüchen 9 bis 15 niedergelegt.

Das erfindungsgemäße Verfahren umfasst die an sich bereits bekannten Verfahrensschritte:
(a) Positionieren des Objekts auf einer Halterung,
(b) Festlegen einer Mehrzahl von Messpunkten auf dem Objekt,
(c) Bereitstellen mindestens eines Laserinterferometers, dessen Messstrahl oder dessen mehrere Messstrahlen mittels jeweils einer Strahlrichteinheit in ihrer Richtung verändert werden können,
(d) sukzessives Richten des mindestens einen Messstrahls auf die Messpunkte mittels der Strahlrichteinheit und Erfassen von Schwingungsdaten durch Überlagerung des vom Objekt zurückreflektierten oder zurückgestreuten Messstrahls mit einem Referenzstrahl des Laserinterferometers,
(e) Zuordnen der Schwingungsdaten zu den Messpunkten und Auswerten der Schwingungsdaten,
(f) Ausgeben der ausgewerteten Schwingungsdaten in Korrelation zu den Messpunkten, vorzugsweise in einem objektbezogenen Koordinatensystem.

Wesentlich ist nun, dass das Objekt im Verfahrensschritt (a) auf einer als Drehvorrichtung ausgestalteten Halterung positioniert wird, die um eine Drehachse drehbar ist, und dass vor dem Verfahrensschritt (d) ein räumlicher Bezug zwischen dem Laserinterferometer, der Drehachse und dem Objekt hergestellt wird, sowie dass im Verfahrensschritt (d) die Drehvorrichtung - motorisch oder von Hand - mindestes einmal um einen vorgegebenen oder durch Winkelmessung erfassten Drehwinkel φ um die Drehachse gedreht wird.

Der räumliche Bezug zwischen dem Laserinterferometer, der Drehachse und dem Objekt wird durch mindestens zwei der folgenden drei Verfahrensschritte hergestellt:
(h1) Herstellen eines räumlichen Bezugs zwischen dem Laserinterferometer und der Drehachse;
(h2) Herstellen eines räumlichen Bezugs zwischen der Drehachse und dem Objekt;
(h3) Herstellen eines räumlichen Bezugs zwischen dem Objekt und dem Laserinterferometer.

Das Positionieren des Objekts auf der Drehvorrichtung unterliegt keinen Vorgaben; das Objekt kann ganz einfach auf beispielsweise einen Drehteller aufgelegt werden; die Drehvorrichtung kann ein Drehtisch sein. Wichtig ist nur, dass sich das Objekt mit der Drehvorrichtung mitdreht, d.h. beim Drehen der Drehvorrichtung darf sich die Lage des Objekts relativ zur Drehvorrichtung nicht verändern.

Ebenso kann das Laserinterferometer im Wesentlichen frei im Raum positioniert werden, beispielsweise mittels eines Stativs; es ist nicht erforderlich, einen bestimmten Abstand zum Objekt einzuhalten. Ebenso ist es nicht erforderlich, das Laserinterferometer zwischen einzelnen Messungen in eine andere Messlage zu bewegen.

Auch eine feste räumliche Zuordnung zwischen der Drehvorrichtung und dem Laserinterferometer ist nicht notwendig. Denn durch das erfindungsgemäße Herstellen eines räumlichen Bezugs zwischen dem Laserinterferometer, der Drehachse und dem Objekt ergibt sich ein gemeinsames Bezugssystem, das beispielsweise ein objektbezogenes Koordinatensystem sein kann (jedoch nicht sein muss) und in dem die Lage des Objekts, die Lage des Laserinterferometers und die Lage der Drehachse bekannt sind.

Die Messpunkte, die auf der Oberfläche des Objekts liegen und als Gesamtheit eine rudimentäre Oberflächentopografie des Objekts bilden, sind in einem objektbezogenen Koordinatensystem bekannt, beispielsweise durch Aufnehmen eines digitalen Bildes, durch photogrammetrische Verfahren, durch ein Streifenprojektionsverfahren, durch eine time-of-flight-Kamera oder durch Auslesen aus einem FE-Modell und dergleichen mehr.

Ein räumlicher Bezug zwischen dem Laserinterferometer und der Drehachse kann hergestellt werden, indem ein Punkt, beispielsweise eine Abgleichmarkierung auf der Drehvorrichtung, oder ein Punkt auf einem separaten Abgleichobjekt, das sich mit der Drehvorrichtung mitdreht, oder ein Messpunkt auf dem Objekt in zwei Drehwinkelstellungen der Drehvorrichtung mit dem Messstrahl angestrahlt wird, wobei dann, wenn zwei verschiedene Punkte der Drehvorrichtung, eines Abgleichobjekts oder des zu vermessenden Objekts in ihrer Lage zueinander bekannt sind, es auch genügt, den Messstrahl in einer ersten Drehwinkelstellung auf den ersten Punkt und in einer zweiten Drehwinkelstellung auf den zweiten Punkt zu richten. Hierdurch kann die Lage der Drehachse im Messgerätbezugssystem ermittelt werden. Falls nicht vorbekannt, können bei Verwendung von mehreren Messköpfen auch die einzelnen Messlagen der Messköpfe zueinander ermittelt werden. Üblicherweise werden mehrere Punkte und drei Drehwinkelstellungen der Drehvorrichtung verwendet, um die Genauigkeit der Bestimmung der Lagen zu erhöhen.

Das Laserinterferometer, das bevorzugt drei Messköpfe umfasst, deren einzelnen Messlagen während der Messung relativ zueinander festgelegt sind, kann, wie erwähnt, frei im Raum positioniert werden. Hierbei können mehrere Messköpfe in einer bekannten, festen Zuordnung zueinander stehen, oder jeder für sich frei positioniert werden. Durch Richten des Messstrahls oder insbesondere der drei Messstrahlen auf mindestens drei Messpunkte auf dem Objekt kann ein räumlicher Bezug zwischen dem Laserinterferometer bzw. dessen Messköpfen und dem Objekt, wie an sich bekannt, leicht hergestellt werden,

Der räumliche Bezug zwischen der Drehachse und dem Objekt kann beispielsweise mittels einer Kamera hergestellt werden, die das Objekt in zwei unterschiedlichen

Drehwinkelstellungen aufnimmt und dabei die Oberflächentopografie erfasst. Alternativ können auch wiederum mindestens zwei Punkte auf der Objektoberfläche, die in einer bekannten Lage zueinander stehen, in zwei Drehwinkelstellungen der Drehvorrichtung beispielsweise vom Messstrahl des Laserinterferometers in ihrer jeweiligen Position bestimmt und daraus der Bezug zwischen dem Objekt und der Drehachse hergestellt werden.

In jedem Fall ist es wesentlich, die Lage des Laserinterferometers, die Lage der Drehachse und die Lage des zu vermessenden Objekts in einem gemeinsamen Bezugssystem zu kennen, wobei dieses gemeinsame Bezugssystem nur vorzugsweise ein objektbezogenes Koordinatensystem ist, was es erleichtert, die gemessenen und ausgewerteten Schwingungsdaten besonders leicht erfassbar im objektbezogenen Koordinatensystem auszugeben.

Die erfindungsgemäße Vorrichtung zur berührungslosen Schwingungsmessung ist insbesondere geeignet und dazu vorgesehen, das erfindungsgemäße Verfahren durchzuführen. Die Vorrichtung umfasst eine Halterung zum Positionieren des Objekts sowie mindestens ein Laserinterferometer mit einem oder mehreren Messköpfen, dessen Messstrahl oder deren mehrere Messstrahlen mittels jeweils einer Strahlrichteinheit in ihrer Richtung veränderbar sind. Dies erfolgt insbesondere durch Ablenken des Messstrahls, vorzugsweise mittels drehbarer Spiegel im Rahmen eines X-Y-Scanners, wobei die Ablenkwinkel und damit die Raumrichtung des Messstrahls vorgegeben werden können oder zumindest aus der Strahlrichteinheit auslesbar sind. Mit jedem Messstrahl werden Schwingungsdaten an einem Messpunkt erfasst, indem der vom Messpunkt zurückreflektierte oder zurückgestrahlte Messstrahl mit einem Referenzstrahl überlagert wird. Eine Steuereinheit richtet den mindestens einen Messstrahl oder mehrere Messstrahlen gleichzeitig mittels je einer Strahlrichteinheit pro Messkopf sukzessive auf eine Mehrzahl von vorab festgelegten Messpunkten auf dem Objekt. Eine Auswerteeinheit, die mit der Steuereinheit zusammenwirkt, legt die Messpunkte fest, ordnet die Schwingungsdaten aus dem Laserinterferometer den Messpunkten zu und wertet die Schwingungsdaten aus, die sodann von einer Ausgabeeinheit in Korrelation zu den Messpunkten ausgegeben werden, insbesondere in einem objektbezogenen Koordinatensystem.

Wesentlich ist bei der erfindungsgemäßen Vorrichtung, dass die Halterung zum Positionieren des Objekts eine Drehvorrichtung ist, die um eine Drehachse drehbar ist und insbesondere als Drehtisch ausgebildet ist, auf den das Objekt aufgestellt werden kann, und dass die Steuereinheit außerdem dazu ausgebildet ist, die Drehvorrichtung mindestens einmal um einen vorgegebenen Drehwinkel φ motorisch um die Drehachse zu drehen, oder eine solche Drehung, die nicht unbedingt motorisch erfolgen muss, durch Winkelmessung zu erfassen, wonach sie den mindestens einen Messstrahl oder die mehreren Messstrahlen gleichzeitig wiederum sukzessive auf eine Mehrzahl von vorab festgelegten Messpunkten auf dem Objekt richtet.

Die Auswerteeinheit ist vorzugsweise so ausgebildet, dass sie für die Festlegung der Messpunkte und/oder die Zuordnung der Schwingungsdaten zu den Messpunkten einen räumlichen Bezug zwischen dem Laserinterferometer, der Drehachse und dem Objekt, und somit ein gemeinsames Bezugssystem herstellt. Dies erfolgt durch mindestens zwei der folgenden drei Maßnahmen:
- Herstellen eines räumlichen Bezugs zwischen dem Laserinterferometer und der Drehachse
- Herstellen eines räumlichen Bezugs zwischen der Drehachse und dem Objekt
- Herstellen eines räumlichen Bezugs zwischen dem Objekt und dem Laserinterferometer.

Das Festlegen einer Mehrzahl von Messpunkten auf dem Objekt erfolgt vorzugsweise an einer Visualisierung des Objekts, insbesondere auf einem Display. Dementsprechend ist die Auswerteeinheit der erfindungsgemäßen Vorrichtung auch vorzugsweise dazu ausgebildet, zur Festlegung der Messpunkte das Objekt auf einem Display zu visualisieren und die Messpunkte durch Benutzereingaben festzulegen.

Die Strahlrichteinheit, die bevorzugt verwendet wird, enthält vorzugsweise angesteuerte drehbare Spiegel zum gezielten Ablenken des Messstrahls. Sie ist, wie bereits erwähnt, zweckmäßigerweise ein X-Y-Scanner, der mit angesteuert drehbaren Spiegeln zum gezielten Ablenken des Messstrahls arbeitet. Wenn mehrere Messköpfe zum Einsatz kommen, kann jeder Messstrahl mit einer eigenen, solcherart ausgebildeten Strahlrichteinheit ausgestattet sein.

Das Objekt und das Laserinterferometer werden im Rahmen des erfindungsgemäßen Verfahrens vorzugsweise so positioniert, dass durch Drehen der Drehvorrichtung mehr Messpunkte vom Messstrahl oder den Messstrahlen erreicht werden können, als wenn das Objekt beim sukzessiven Richten des Messtrahls oder der Messstrahlen auf die Messpunkte nicht gedreht würde. Insbesondere in diesem Zusammenhang hat es sich als vorteilhaft herausgestellt, wenn der auf das Objekt auftreffende mindestens eine Messstrahl des Laserinterferometers bei mindestens einer Stellung der Strahlrichteinheit einen Winkel α von α > 20°, bevorzugt α > 45° und ganz besonders bevorzugt α > 60° relativ zur Drehachse der Drehvorrichtung einnimmt. Das Laserinterferometer ist bevorzugt bezüglich des Objekts so angeordnet, dass der auf das Objekt auftreffende mindestens eine Messstrahl des Laserinterferometers die voranstehend genannten Winkel einnimmt.

Das Laserinterferometer umfasst bevorzugt mindestens zwei, und besonders vorteilhaft drei Messköpfe, deren Messstrahlen bei jedem Messpunkt einen Winkel β > 3°, bevorzugt β > 10° zwischen sich einschließen, sodass an jedem Messpunkt Schwingungsbewegungen in drei unterschiedlichen Raumrichtungen erfasst werden können.

Zum Herstellen eines räumlichen Bezugs zwischen dem Laserinterferometer und der Drehachse, der im Rahmen des erfindungsgemäßen Verfahrens notwendig sein kann, kann eine Abgleichmarkierung auf der Drehvorrichtung oder ein sich mit der Drehvorrichtung mitdrehendes Abgleichobjekt dienen: Der Messstrahl, dessen Raumrichtung bezüglich des Laserinterferometers bekannt ist, wird auf die Abgleichmarkierung oder auf einen Punkt mit eindeutigem räumlichen Zusammenhang mit der Abgleichmarkierung gerichtet, dann die Drehvorrichtung zweimal in eine andere Drehwinkelstellung gedreht und der Messstrahl jeweils auf denselben Punkt oder auf einen zweiten Punkt, von dem auf den ersten Punkt zurückgerechnet werden kann, gerichtet. Durch die notwendige Veränderung der Raumrichtung des Laserstrahls kann auf die Lage der Drehachse im Bezugssystem des Laserinterferometers geschlossen werden. Wenn dieser Vorgang so durchgeführt wird, dass der Messstrahl auf drei verschiedene Abgleichmarkierungen gerichtet wird, reicht eine Drehung der Drehvorrichtung. Entsprechend kann auch ein Abgleichobjekt verwendet werden, das beispielsweise frei positionierbar auf den Drehtisch gestellt wird, und das sich jedenfalls mit der Drehvorrichtung mitdrehen muss, wenn die Drehvorrichtung in eine andere Drehwinkelstellung gedreht wird.

Es kann auch mit einer Kamera ein digitales Bild der Drehvorrichtung und/oder des Abgleichobjekts verwendet werden, so dass man die Raumrichtung des Messstrahls nicht kennen muss, soweit die Kamera und das Laserinterferometer räumlich eindeutig einander zugeordnet sind. Denn die Veränderung der Lage des Laserflecks auf der Drehvorrichtung oder dem Abgleichobjekt, die anhand des digitalen Bildes nachvollzogen werden kann, lässt auf die Lage der Drehachse rückschließen.

Die erfindungsgemäße Vorrichtung ist dementsprechend vorzugsweise mit einer oder mehreren Abgleichmarkierungen auf der Drehvorrichtung oder mit einem sich mit der Drehvorrichtung mitdrehenden Abgleichobjekt versehen. Sie kann auch eine Kamera umfassen, um das eben beschriebene Verfahren zum Herstellen eines räumlichen Bezugs zwischen dem Laserinterferometer und der Drehachse durchzuführen.

Das Abgleichobjekt kann ein frei auf der Drehvorrichtung positionierbarer, mit Abgleichmarkierungen versehener Gegenstand sein. Abgleichmarkierungen können auch durch die Formgebung des Abgleichobjekts gebildet werden.

Zum Herstellen eines räumlichen Bezugs zwischen der Drehachse und dem Objekt, der im Rahmen des erfindungsgemäßen Verfahrens notwendig sein kann, kann mindestens eine Kamera und je mindestens ein von dieser aufgenommenes digitales Bild des Objekts in mindestens zwei verschiedenen Drehwinkelstellungen der Drehvorrichtung verwendet werden. Diese kann auch zum Herstellen eines räumlichen Bezugs zwischen dem Objekt und der Drehachse dienen; dementsprechend ist eine solche bei der erfindungsgemäßen Vorrichtung bevorzugt vorhanden.

Zum Herstellen eines räumlichen Bezugs zwischen dem Objekt und dem Laserinterferometer kann im Rahmen der vorliegenden Erfindung auch eine Oberflächentopografie des Objekts ermittelt werden, die zumindest die Messpunkte umfasst, und hierzu können Konstruktionsdaten des Objekts, insbesondere ein Finite-Elemente-Modell (FE-Modell), und/oder photogrammetrische Verfahren, für die eine Kamera wiederum zweckmäßig ist, und/oder ein Streifenprojektionsverfahren und/oder eine Time-of-flight-Kamera verwendet werden. Wenn photogrammetrische Verfahren verwendet werden, ist es zweckmäßig, Kamerabilder in mindestens zwei verschiedenen Drehwinkelstellungen der Drehvorrichtung aufzunehmen und dadurch die Oberflächentopografie zu ermitteln.

Für das Festlegen der Messpunkte und ein Zuordnen derselben zu mindestens einer Drehwinkelstellung ist es vorteilhaft, wenn in der entsprechenden Drehwinkelstellung die zugeordneten Messpunkte von mindestens einen Messstrahl erreichbar sind und vorzugsweise vom Messstrahl in einem Auftreffwinkel auf die Oberfläche des Objekts erreicht werden, der möglichst nahe an der Oberflächennormalen liegt und besonders bevorzugt nicht abgeschattet sind, beispielsweise durch benachbarte Oberflächenbereiche, durch Kabel, durch einen Schwingungserreger oder dergleichen. Hierzu können bei oder nach dem Ermitteln der Oberflächentopografie oder anhand der aufgenommenen digitalen Bilder Messpunkte identifiziert werden, die in bestimmten Drehwinkelpositionen der Drehvorrichtung bezüglich des Messstrahls oder der Messstrahlen Abschattungen unterworfen sind.

Bei der erfindungsgemäßen Vorrichtung ist es dann, wenn die Auswerteeinheit dazu ausgebildet ist, insbesondere durch photogrammetrische Verfahren an mindestens zwei verschiedenen Drehwinkelstellungen der Drehvorrichtung Bilder aufzunehmen und daraus eine Oberflächentopografie des Objekts zu ermitteln, bevorzugt, wenn die Auswerteeinheit außerdem dazu ausgebildet ist, beim Ermitteln der Oberflächentopografie Messpunkte zu identifizieren, die in bestimmten Drehwinkelpositionen der Drehvorrichtung bezüglich des Messstrahls oder der mehreren Messstrahlen Abschattungen unterworfen sind, beispielsweise durch benachbarte Oberflächenbereiche oder Kabel und dergleichen Gegenstände.

Das Laserinterferometer kann auf einer beweglichen oder verstellbaren Messhalterung sitzen, wenn gewünscht auch auf einer programmgesteuert beweglichen Messhalterung, um die Lage des Laserinterferometers verändern zu können, wenn die Messpunkte trotz einer Drehung der Drehvorrichtung ansonsten nicht optimal oder gar nicht erreichbar sind. Die besonderen Vorteile der vorliegenden Erfindung, eine berührungslose Schwingungsmessung besonders unkompliziert und rasch durchführen zu können, werden jedoch dann am besten realisiert, wenn das Laserinterferometer auf einem frei positionierbaren Stativ sitzt - was nicht ausschließt, dass das Stativ umgesetzt oder in seiner Höhe verändert wird, um Messpunkte mit dem Messstrahl optimal erreichen zu können.

Schließlich ist es im Rahmen der vorliegenden Erfindung bevorzugt, einen Schwingungserreger auf der Drehvorrichtung zu positionieren, um das Objekt für die Schwingungsmessung zu Schwingungen anzuregen.

Das erfindungsgemäße Verfahren und die erfindungsgemäße Vorrichtung ermöglichen also eine besonders einfach aufgebaute und rasche berührungslose Schwingungsmessung eines Objekts, das hierfür nur auf einen Drehteller oder an eine sonstige Drehvorrichtung gesetzt werden muss. Eine Software kann dann selbsttätig dafür sorgen, dass die Messpunkte festgelegt werden - wahlweise kann dies auch der Anwender am Display vornehmen -, dass ein gemeinsames Bezugssystem zwischen dem Laserinterferometer, dem Objekt und der Drehachse ermittelt wird, dass optimale Drehwinkelpositionen für die Messung an den Messpunkten festgelegt werden und die Schwingungsmessung dann sukzessive, unter schrittweiser Drehung der Drehvorrichtung durchgeführt wird. Die Messung kann, soweit das Laserinterferometer und das Objekt nicht verstellt werden, insbesondere sofort nach einer Drehung der Drehvorrichtung fortgesetzt werden, was den gesamten Messvorgang gegenüber dem Stand der Technik erheblich beschleunigt.

Eine Auswertung der so erfassten Schwingungsdaten kann dann insbesondere anhand einer Visualisierung des gemessenen Objekts ausgegeben werden. Außer den Spiegeln in einem oder mehreren X-Y-Scannern und der Drehvorrichtung sind vorteilhafterweise keine mechanischen Bewegungen der Komponenten der erfindungsgemäßen Vorrichtung erforderlich.

Im Folgenden werden anhand der beigefügten, lediglich schematischen Zeichnungen Ausführungsbeispiele für eine erfindungsgemäß ausgestaltete Vorrichtung zur berührungslosen Schwingungsmessung beschrieben, woraus sich auch Ausführungsbeispiele für das erfindungsgemäße Verfahren ergeben. Es zeigen:
- Figur 1: den Aufbau eines Beispiels für eine erfindungsgemäß ausgestaltete Vorrichtung;
- Figur 2: den Aufbau aus Figur 1, während eines Messvorgangs;
- Figur 3: den Aufbau aus Figur 1, in einer anderen Phase des Messvorgangs;
- Figur 4: den Aufbau aus Figur 1, mit verstellbarer Messhalterung für das Laserinterferometer;
- Figur 5: eine Darstellung wie Figur 4 zur Verdeutlichung von Winkelverhältnissen;
- Figur 6: eine Darstellung der Einstrahlung dreier Messstrahlen auf einen Messpunkt, zur Verdeutlichung einer Strahlrichteinheit und der Winkelverhältnisse zwischen den Messstrahlen;
- Figur 7: den Aufbau aus Figur 1, bei der Vorbereitung eines weiteren Messvorgangs;
- Figur 8: den Aufbau aus Figur 1, bei der Vorbereitung eines weiteren Messvorgangs;
- Figur 9: den Aufbau eines anderen Beispiels für eine erfindungsgemäß ausgestaltete Vorrichtung, beim Messvorgang;
- Figur 10: den Aufbau aus Figur 1, beim Herstellen eines gemeinsamen Bezugssystems zwischen Objekt, Drehachse und Laserinterferometer;
- Figur 11: eine Darstellung wie Figur 10, jedoch in einem späteren Zeitpunkt:
- Figur 12: einen Aufbau zur Herstellung eines gemeinsamen Bezugssystems;
- Figur 13: den Aufbau zur Herstellung eines gemeinsamen Bezugssystems.

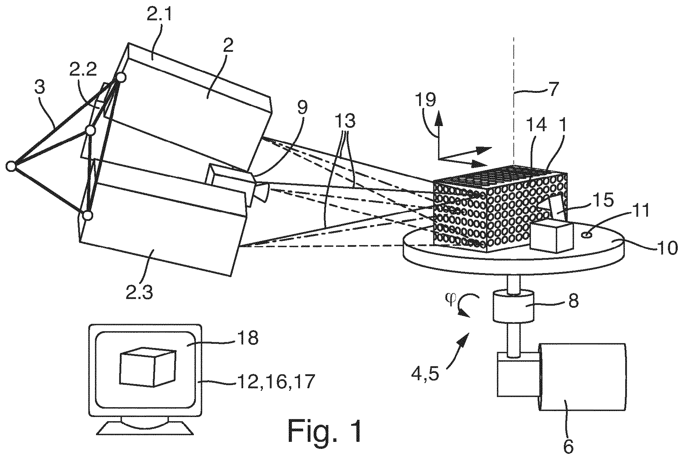

In Figur 1 ist schematisch der Aufbau eines Beispiels für eine erfindungsgemäß ausgestaltete Vorrichtung dargestellt. Die dargestellten Teile der Vorrichtung sind: Ein Objekt 1, dessen Schwingungsverhalten gemessen werden soll, ein Laserinterferometer 2, vorliegend bestehend aus drei einzelnen Messköpfen 2.1, 2.2, 2.3, die im vorliegenden Ausführungsbeispiel mittels einer Messhalterung 3 in ihrer Zuordnung zueinander fest verbaut sind - aber auch frei positioniert werden könnten, da ihre jeweiligen Messlagen im Rahmen des erfindungsgemäßen Verfahrens ermittelt werden -, eine als Drehtisch 10 ausgebildete Drehvorrichtung 4 als Halterung 5, auf der das Objekt 1 positioniert worden ist, wobei die Drehvorrichtung 4 vorliegend mittels eines Antriebsmotors 6 um eine Drehachse 7 gedreht werden kann. Ein Encoder 8 an der Drehvorrichtung 4 dient dazu, einen Drehwinkel φ um die Drehachse 7 zu bestimmen.

Der in Figur 1 dargestellte Aufbau umfasst außerdem eine Kamera 9, die im vorliegenden Ausführungsbeispiel im Laserinterferometer 2 fest verbaut ist und dementsprechend diesem eindeutig zugeordnet ist. An dieser Stelle ist anzumerken, dass die Kamera 9 auch frei im Raum positioniert werden kann, und dass auch mehrere Kameras verwendet werden können, um die Genauigkeit der Abgleiche und der Messungen zu erhöhen.

Die Drehvorrichtung 4, genauer: der Drehtisch 10 weist eine Abgleichmarkierung 11 auf, um einen räumlichen Bezug zwischen dem Laserinterferometer 2 und der Drehachse 7 oder zwischen der Drehachse 7 und dem Objekt 1 herzustellen, worauf später eingegangen wird.

Eine Steuereinheit 12 steuert sowohl den Antriebsmotor 6 als auch das Laserinterferometer 2, genauer: dessen Strahlrichteinheit, die in der vorliegenden Darstellung nicht sichtbar ist, jedoch für jeden Messkopf 2.1, 2.2, 2.3 aus einem üblichen X-Y-Scanner mit drehbaren Spiegeln zum Ablenken des aus dem Messkopf ausgestrahlten Laserstrahls besteht. Die Steuereinheit 12 ist als Software in einem handelsüblichen Computer implementiert.

Wie in Figur 1 angedeutet ist, sendet jeder Messkopf 2.1, 2.2, 2.3 des Laserinterferometers 2 einen Messstrahl 13 aus, der auf einen Messpunkt 14 einer Mehrzahl von Messpunkten auf dem Objekt 1 gerichtet ist. In Figur 1 sind jeweils drei Messstrahlen 13 für jeden Messkopf 2.1, 2.2, 2.3 dargestellt, um zu symbolisieren, dass die Messstrahlen 13 die Messpunkte 14 auf dem Objekt 1 scannen, um das Objekt 1 sukzessive an allen Messpunkten 14 zu vermessen. Hierfür ist ein Schwingungserreger 15 auf dem Drehtisch 10 angeordnet, mit dem das Objekt 1 zu Schwingungen angeregt wird.

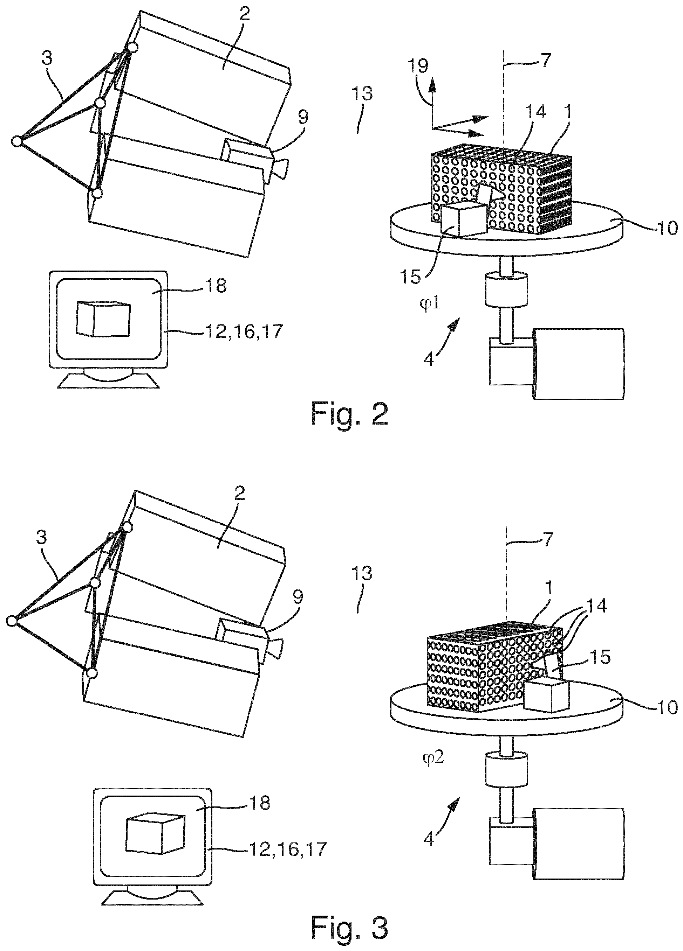

Die Figuren 2 und 3 verdeutlichen anhand einer Darstellung wie Figur 1 einen Messvorgang: In einer ersten Winkelstellung φ1 der Drehvorrichtung 4 wird das Objekt 1 mittels des Schwingungserregers 15 zu Schwingungen angeregt, und das Laserinterferometer 2 scannt die in dieser Drehwinkelstellung φ1 optimal erreichbaren Messpunkte 14 des Objekts 1 und nimmt für jeden Messpunkt 14 entsprechende Schwingungsdaten auf.

Wie Figur 3 zeigt, wird die Messung fortgesetzt, nachdem das Objekt 1 mittels der Drehvorrichtung 4 um die Drehachse 7 gedreht wurde und nun in einer zweiten Drehwinkelstellung φ2 steht. Nun werden die in dieser Drehwinkelstellung φ2 optimal erreichbaren Messpunkte 14 vom Laserinterferometer 2 vermessen, während der Schwingungserreger 15 das Objekt 1 weiterhin zum Schwingen anregt.

Im selben handelsüblichen Computer, in dem die Steuereinheit 12 als Software implementiert ist, ist auch eine Auswerteeinheit 16 als Software implementiert, welche mit der Steuereinheit 12 zusammenwirkt, die Messpunkte 14 festlegt, die Schwingungsdaten aus dem Laserinterferometer 2 den Messpunkten 14 zuordnet und die Schwingungsdaten auswertet. Wiederum im selben Computer ist eine Ausgabeeinheit 17 implementiert, die beispielsweise, wie in den Figuren angedeutet, das Objekt 1 auf einem Display 18 visualisiert und dessen gemessenes Schwingungsverhalten in einem objektbezogenen Koordinatensystem 19 ausgibt.

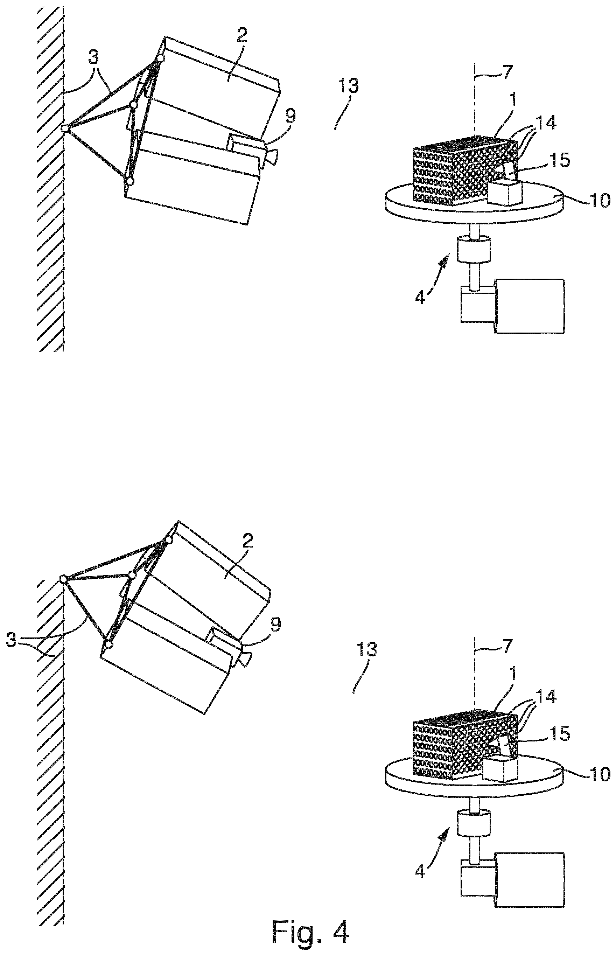

Figur 4, die wiederum eine Darstellung des Ausführungsbeispiels aus den Figuren 1 bis 3 ist, verdeutlicht, dass das Laserinterferometer 2 gegenüber der Drehvorrichtung 4 frei im Raum positioniert werden kann: Im oberen Teilbild der Figur 4 ist das Laserinterferometer 2 wie in den vorangegangenen Figuren an der Messhalterung 3 angebracht, wohingegen das untere Teilbild der Figur 4 verdeutlicht, dass das Laserinterferometer 2 weiter oben an der Messhalterung 3 angebracht, also auf der Messhalterung 3 versetzt wurde, um die nach oben weisende Fläche des Objekts 1 besser vermessen zu können: Die Messstrahlen 13 treffen dann in einem weniger spitzen Winkel auf diese obere Fläche des Objekts 1 auf, als dies ohne Verstellung des Interferometers 2 möglich gewesen wäre.

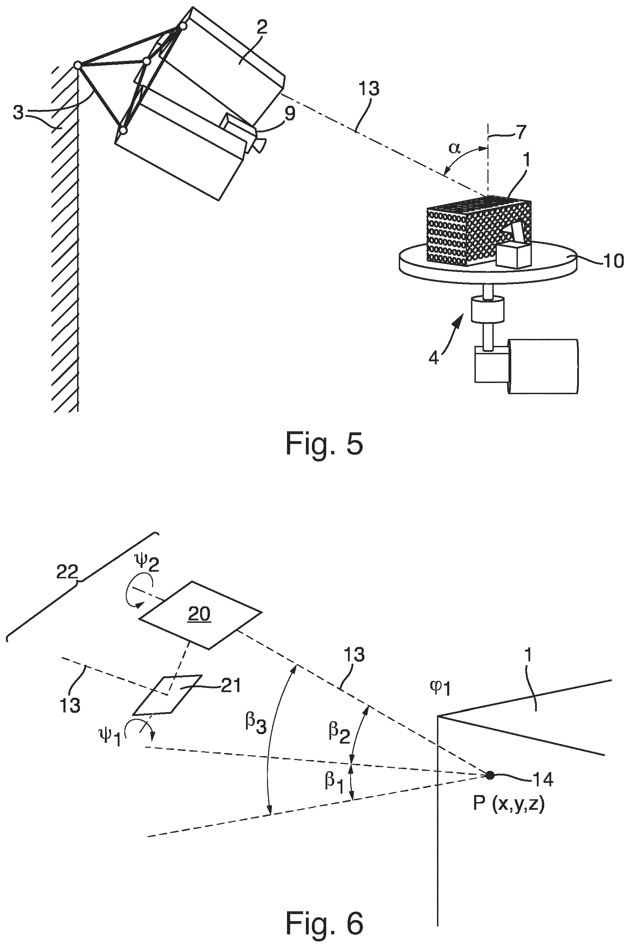

Figur 5, die einer Darstellung des unteren Teilbilds der Figur 4 entspricht, verdeutlicht einen Winkel α des Messstrahls 13 an einem bestimmten Messpunkt 14 zur Drehachse 7. Dieser sollte möglichst für eine Mehrzahl der Messpunkte 14 sowie für alle drei Messköpfe 2.1, 2.2 und 2.3 mehr als 20 Winkelgrade betragen, bevorzugt mehr als 45 Winkelgrade und ganz besonders bevorzugt mehr als 60 Winkelgrade.

Figur 6 verdeutlicht, dass die drei Messstrahlen 13 der drei Messköpfe 2.1, 2.2 und 2.3 des Laserinterferometers 2 an jedem Messpunkt 14 einen Winkel β1, β2 und β3 untereinander einnehmen, der größer als 3 Winkelgrade und vorzugsweise größer als 10 Winkelgrade beträgt, um so das Schwingungsverhalten des Objekts 1 am Messpunkt 14 in drei verschiedenen Raumrichtungen aufnehmen und auswerten zu können. Für einen ersten Messstrahl 13 symbolisieren zwei Spiegel 20, 21 einen X-Y-Scanner als Strahlrichteinheit 22, mit der der Messstrahl 13 um einen ersten Ablenkwinkel ψ1 in einer ersten Raumrichtung und einem darauf senkrecht stehenden zweiten Ablenkwinkel ψ2 abgelenkt werden kann, um sukzessive alle Messpunkte 14 erreichen zu können. Die anderen beiden Messstrahlen 13 werden mit ebensolchen Spiegeln 20, 21 solcherart abgelenkt, dass sich die Messstrahlen 13 im jeweilige Messpunkt 14 treffen.

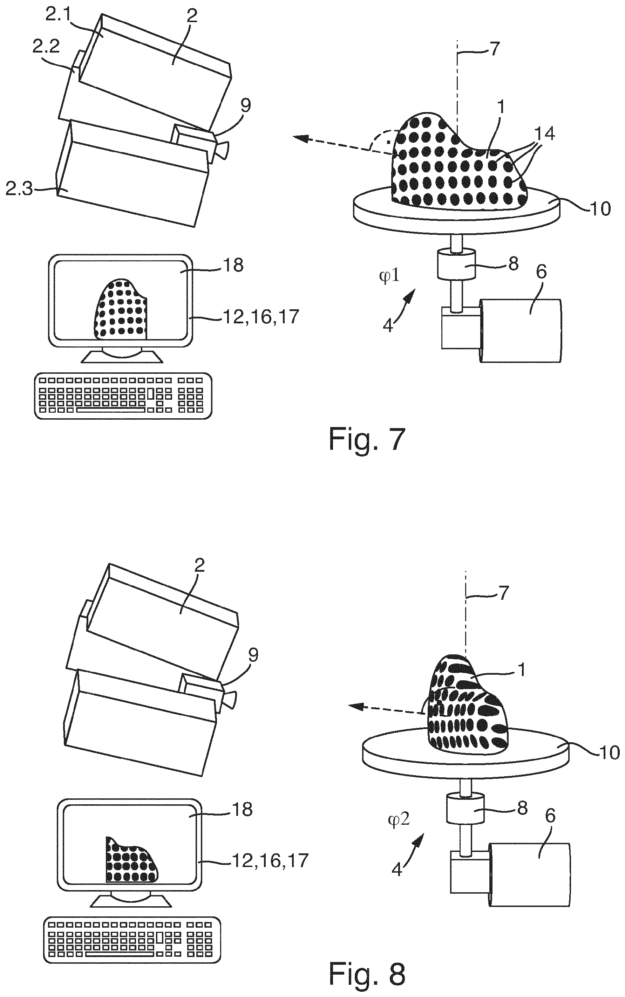

Die Figuren 7 und 8 zeigen die Vorbereitung einer Messung, wie sie in den Figuren 2 und 3 mit einem anderen Objekt 1 dargestellt ist. Das in den Figuren 7 und 8 dargestellte Objekt 1 ist unregelmäßiger geformt, so dass es sinnvoll ist, jedem Messpunkt 14 eine Drehwinkelstellung φ1, φ2 zuzuordnen, in der die Messstrahlen 13 möglichst nahe der Flächennormalen auf die Oberfläche des Objekts 1 auftreffen, wenn sie auf den jeweiligen Messpunkt 14 gerichtet sind. Hierzu dient die Auswerteeinheit 16, in der mittels der Kamera 9 ein Bild des Objekts 1 dargestellt ist. Über Benutzereingaben können diejenigen Messpunkte 14 identifiziert werden, die in der Drehwinkelstellung φ1 optimal erreicht werden.

In Figur 8 zeigt die Auswerteeinheit diejenigen, durch Benutzereingabe ausgewählten Messpunkte 14, die in der veränderten Drehwinkelstellung φ2 optimal vermessen werden können.

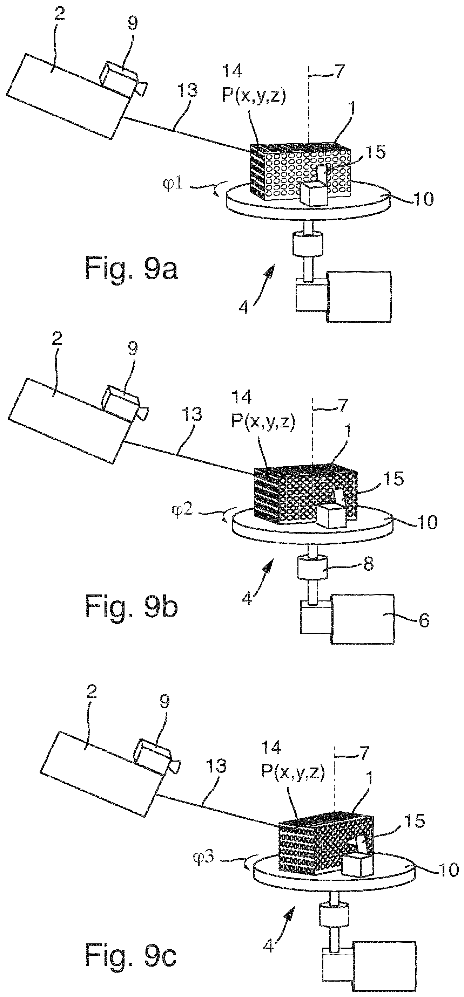

Die Figuren 9a, 9b und 9c zeigen ein Ausführungsbeispiel für eine erfindungsgemäß ausgestaltete Vorrichtung, bei der das Laserinterferometer 2 nur einen Messkopf umfasst. Der einzige Messstrahl 13 wird auf einen Messpunkt 14 gerichtet, während der Schwingungserreger 15 das Objekt 1 zu Schwingungen anregt.

In Figur 9a erfolgt dies in einer ersten Drehwinkelstellung φ1. Danach wird die Drehvorrichtung 4 um die Drehachse 7 gedreht, so dass, wie Figur 9b zeigt, die Messung an denselben Messpunkt 14 in einer zweiten Drehwinkelstellung φ2 durchgeführt werden kann. Wie schließlich Figur 9c zeigt, wird derselbe Messpunkt 14 nochmals in einer dritten Drehwinkelstellung φ3 vermessen, so dass im Ergebnis der Messpunkt 14, wie bei einem Laserinterferometer 2 mit drei Messköpfen, Schwingungsdaten in drei unterschiedlichen Raumrichtungen liefert.

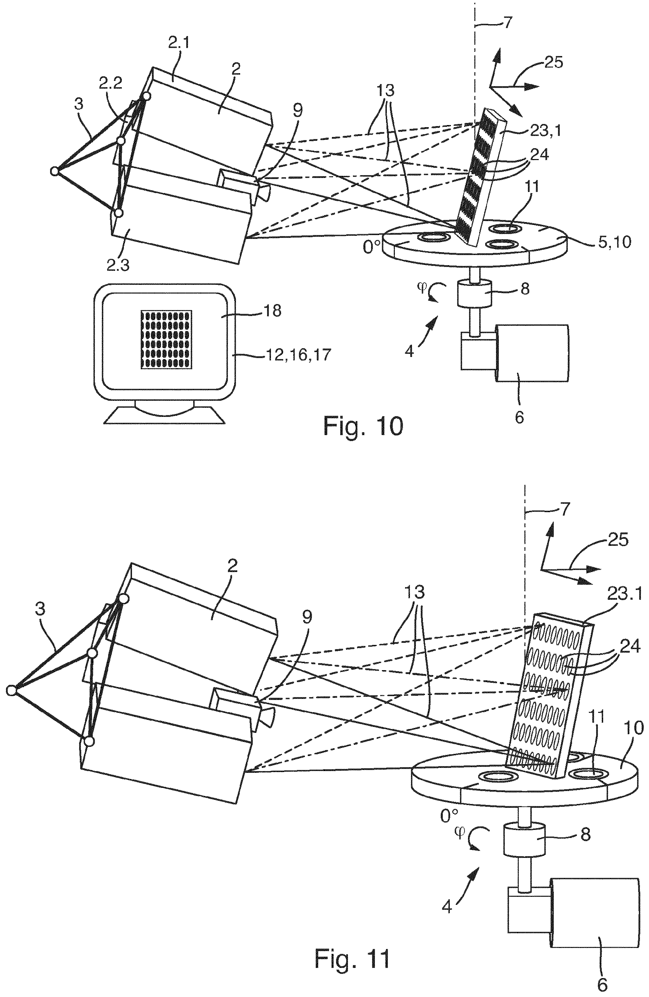

Die Figuren 10 und 11 verdeutlichen, wie erfindungsgemäß ein gemeinsames Bezugssystem der Drehachse 7, des Objekts 1 und des Laserinterferometers 2 hergestellt werden kann, obwohl das Objekt 1 frei auf dem Drehtisch 10 positioniert wird und das Laserinterferometer 2 ebenso frei im Raum positioniert werden kann.

Beim Objekt 1 handelt es sich vorliegend um ein Abgleichobjekt 23, das mit einer Mehrzahl von Markierungen 24 bedruckt ist, deren Position auf dem Abgleichobjekt 23 bekannt sind. Durch Richten der Messstrahlen 13 auf möglichst mehrere Markierungen 24 auf dem Abgleichobjekt 23 kann die Lage (Position und Orientierung) der Messköpfe 2.1, 2.2 und 2.3, und somit die Lage des Laserinterferometers 2 im objektbezogenen Koordinatensystem 19 bestimmt werden.

Wird nun, wie Figur 11 zeigt, die Drehvorrichtung 4 um einen bestimmten Drehwinkel φ, beispielsweise um 20 Winkelgrade gedreht, kann durch eine erneute Erfassung der Markierungen 24 auf dem Abgleichobjekt 23 die Lage der Drehachse 7 im objektbezogenen Koordinatensystem, hier im Koordinatensystem 25 des Abgleichobjekts bestimmt werden. Dies funktioniert selbstredend nicht nur im objektbezogenen Koordinatensystem, sondern auch in einem Messgerätbezugssystem oder in einem drehachsenbezogenen Koordinatensystem. Wichtig ist nur, dass ein gemeinsames Bezugssystem gefunden wird, um die erfindungsgemäßen Schwingungsmessungen durchzuführen und auszuwerten. Der Bezug auf ein objektbezogenes Koordinatensystem ist hierbei vorteilhaft, weil die ausgewerteten Schwingungsdaten dann besonders einfach visualisiert ausgegeben werden können.

Ein Beispiel für ein erfindungsgemäß ausgestaltetes Verfahren, das auf der in den Zeichnungen dargestellten Vorrichtung durchgeführt wird, ist das folgende:
Ein als 3D-Scanning-Vibrometer ausgestaltetes Laserinterferometer 2, bestehend aus drei Messköpfen 2.1, 2.2 und 2.3, jeder Messkopf mit einem XY-Scanner als Strahlrichteinheit 22 und einem Laser-Vibrometer, werden auf einer stationären (nicht programmgesteuert beweglichen) Messhalterung 3 positioniert (Die Messköpfe können frei gegenüber der Drehvorrichtung 4 positioniert werden). In einem ersten Schritt wird ein Abgleichobjekt 23 auf der Drehvorrichtung 4 positioniert. Das Abgleichobjekt 23 ist ein Gegenstand mit bekannten Koordinaten, auf die einfach und sicher eine Positionierung der Laserstrahlen durchgeführt werden kann. Mit Hilfe des Abgleichobjekts 23 wird die Lage (=Position und Orientierung) der Messköpfe 2.1, 2.2, 2.3 ermittelt, indem mit Hilfe der XY-Scanner die Laser auf mindestens drei, besser mehr Punkte auf dem Abgleichobjekt 23 ausgerichtet werden. Aus den Ablenkwinkeln ψ und den Koordinaten x, y, z der Punkte auf dem Abgleichobjekt 23 kann die Lage der Messköpfe 2.1, 2.2, 2.3 berechnet werden. Die Lage wird im Koordinatensystem des Abgleichobjekts 23 ermittelt.

Dieser Vorgang der Bestimmung der Lage der Messköpfe 2.1, 2.2, 2.3 im Koordinatensystem 25 des Abgleichobjekts 23 wird nach Verfahren der Drehachse 7 auf einen anderen Drehwinkel φ₂ wiederholt. Es ist vorteilhaft, die Winkeldifferenz zwischen den beiden Drehwinkelpositionen φ₁, φ₂ zu kennen, was üblicherweise aus der Steuereinheit 12 der Drehvorrichtung 4 vorgegeben oder zumindest ausgelesen werden kann. Aus diesen beiden Lagen der Messköpfe 2.1, 2.2, 2.3 im Koordinatensystem 25 des Abgleichobjekts 23 kann in einem weiteren Schritt die Lage der Drehachse 7 relativ zum Abgleichobjekt 23 ermittelt werden. Vorteilhaft ist die Verwendung zumindest eines weiteren Abgleichs der Lage der Messköpfe 2.1, 2.2, 2.3 im Koordinatensystem 25 des Abgleichobjekts 23 an zumindest einer weiteren Drehposition φ₃. Resultat: Bei bekanntem Drehwinkel φₓ kann nun aus den vorhandenen Informationen jederzeit die Lage der Messköpfe 2.1, 2.2, 2.3 im Koordinatensystem der Drehachse 7 berechnet werden. Allgemein gesagt, wird ein mathematisches Modell der Drehvorrichtung 4 berechnet. Das Abgleichobjekt 23 wird nach diesem Prozessschritt von der Drehvorrichtung 4 entfernt.

Das Objekt 1, dessen Vibrationen gemessen werden sollen, sowie ein Aktuator bzw. Schwingungserreger 15 zur Erzeugung der Vibrationen werden auf der Drehvorrichtung 4 positioniert. Zum Objekt 1 existiert ein Geometriefile mit den Koordinaten der Messpunkte 14, an denen das Schwingungsverhalten gemessen werden soll. Die Erzeugung des Geometriefiles kann beispielsweise durch eine Datenschnittstelle zu den Konstruktionsdaten, insbesondere zu einem FE-Modell, oder durch Scannen mit einem 3D-Scanner oder mittels der Kamera 9 erfolgen.

In einem nächsten Schritt wird die Lage des zu vermessenden Objekts 1 relativ zur Lage der Drehachse 7 ermittelt. Dies kann beispielsweise erfolgen, indem die Messtrahlen 13 der drei Messköpfe 2.1, 2.2, 2.3 an zumindest drei Punkten mit bekannten Koordinaten des zu vermessenden Objekts 1 zur Deckung gebracht werden. Die zugehörigen Koordinaten in der 3D-Geometrie müssen bekannt sein, d. h. der Punkt muss identifiziert werden können. Durch diese Information kann für jeden Drehwinkel φ des Drehtisches 10 die Lage der Messköpfe 2.1, 2.2, 2.3 im Koordinatensystem des zu vermessenden Objekts 1 berechnet werden.

Um alle vordefinierten Punkte auf dem Objekt 1 mit den Messstrahlen 13 erreichen zu können, ist die Verwendung mehrerer Drehwinkelpositionen des Drehtisches 10 nötig. Aus dem Geometriefile und der Lage der Messköpfe 2.1, 2.2, 2.3 im Koordinatensystem des Objekts 1, die sich abhängig vom eingestellten Drehwinkel φ des Drehtisches 10 ändert, kann ermittelt werden, welche Punkte des Objekts 1 an welcher Drehposition φₓ des Drehtisches 10 mit Hilfe der XY-Scanner erreicht werden können. Mit Hilfe dieser Berechnungen kann ein Messprozess zur Schwingungsmessung an den Messpunkten 14 des Objekts 1 automatisiert werden, indem mindestens zwei Drehpositionen φ₁, φ₂ des Drehtisches 10 angefahren werden und an jeder Drehposition φ₁, φ₂ unterschiedliche Messpunkte 14 des Objekts 1 gemessen werden. Dabei können die Drehwinkelpositionen φ₁, φ₂ entweder vom Benutzer vorgegeben werden, oder in einem Optimierungsprozess so berechnet werden, dass möglichst viele Messpunkte 14 aus möglichst wenigen Drehwinkelpositionen φₓ erreicht werden können.

Vorteilhaft ist es, falls Messpunkte 14 des Objekts 1 aus mehreren Drehwinkelpositionen φₓ des Drehtisches 10 erreicht werden können, dass solche Drehwinkelpositionen erreicht werden, an denen der Auftreffwinkel des Messstrahls 14 auf das Objekt 1 günstig ist. Günstige Auftreffwinkel sind Winkel, an denen möglichst viel Licht reflektiert wird, dies sind Winkel, die wenig Abweichung zum senkrechten Auftreffen haben. Vorteilhaft ist ebenfalls, dass das Laserinterferometer 2 beliebig zur Drehachse 7 in Höhe und Neigung positioniert werden kann, so dass auch Objekte 1 mit komplexer Geometrie und unterschiedlichen Größen vermessen werden können.

Nach Beendigung der Schwingungsmessung an allen Messpunkten 14 kann das Ergebnis zusammengefasst werden. Hierfür ist es nötig, dass die Messergebnisse an jeder Drehwinkelposition φₓ des Drehtisches 10 in ein gemeinsames Koordinatensystem (zweckmäßigerweise das Koordinatensystem des zu vermessenden Objekts 1) transformiert werden.

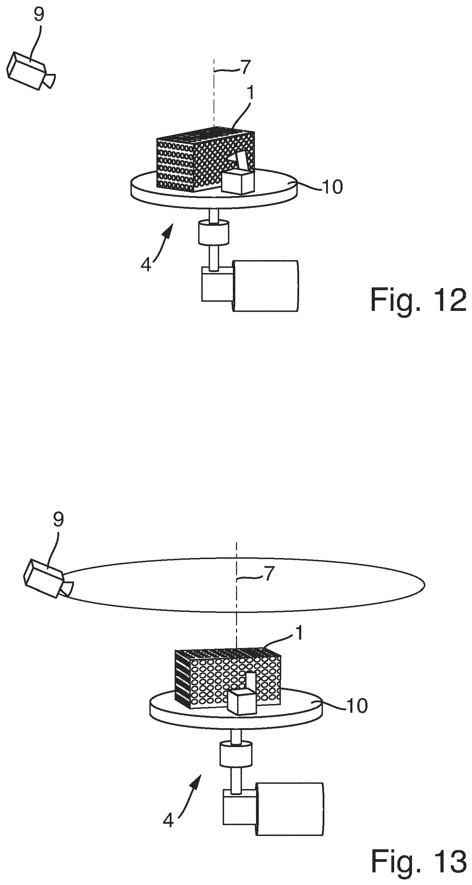

Die Herstellung eines gemeinsamen Bezugssystems ist im Rahmen der vorliegenden Erfindung allerdings auch ohne den Einsatz eines Abgleichobjekts 23 möglich, insbesondere unter Verwendung einer Kamera 9. Die in den Figuren dargestellte Kamera 9 ist fest mit dem Laserinterferometer 2 verbunden; dies ist im Rahmen der vorliegenden Erfindung jedoch nicht unbedingt notwendig, denn die Kamera 9 kann auch frei im Raum positioniert werden, wie dies in den Figuren 12 und 13 symbolisiert ist.

Zwei beispielhafte, erfindungsgemäß ausgestaltete Verfahren zum Herstellen eines gemeinsamen Bezugssystems bzw. der in den Verfahrensmerkmalen h1, h2 und h3 niedergelegten räumlichen Bezüge sind im Folgenden beschrieben:
1. Verfahren unter Verwendung von Photogrammmetrie-Methoden:
   1.1 Verfahrensschritt (h1): Herstellen eines räumlichen Bezugs zwischen dem Laserinterferometer 2 und der Drehachse 7 der Drehvorrichtung 4:
      Es werden nur die Verfahrensschritte (h2) und (h3) durchgeführt. Der Bezug zwischen dem Laserinterferometer 2 und der Drehachse 7 kann über zwei Schritte hergestellt werden; zunächst wird das Laserinterferometer 2 auf das Objekt 1 bezogen, und dann das Objekt 1 auf die Drehachse 7. Dadurch kann z.B. die Lage des Laserinterferometers 2 für jede Drehtischposition in Bezug auf das Objekt 1 bestimmt werden.
   1.2 Verfahrensschritt (h2): Herstellen eines räumlichen Bezugs zwischen der Drehachse 7 und dem Objekt 1:
      Mindestens eine Kamera 9 wird frei relativ zum Objekt 1 und zum Drehtisch 10 positioniert, mit Sicht auf das Objekt 1. Vorteilhaft sind mehrere Kameras für höhere Genauigkeit, weniger Abschattungen bei der Photogrammetrie und die Möglichkeit, ohne Bewegung des Drehtisches 10 eine Oberflächentopografie des Objekts 1 zu ermitteln.
      Die Kamera 9 nimmt an mehreren Drehwinkelpositionen φₓ des Drehtisches 10 digitale Bilder auf. Diese Bilder werden mit einem der Photogrammetrieverfahren (z.B. wie in https://www.mdpi.com/2079-9292/8/12/1441 beschrieben) analysiert. Daraus resultiert eine Oberflächentopographie des Objekts 1, der Halterung, des Schwingungserregers 15, von Kabeln und dergleichen mehr. Daraus resultieren die Lagen der Kamera 9 relativ zum Objekt 1 bzw. Drehtisch 10, im Koordinatensystem der Oberflächentopographie, für jeden Drehwinkel φ des Drehtisches 10.
      Im objektbezogenen Koordinatensystem liegen die Positionen der Kamera 9 aufgrund der Drehbewegung des Drehtisches 10 und der feststehenden Kamera 9 auf einem Kreis, wie in Figur 13 dargestellt.
      Durch eine Anpassung eines Kreises kann die Senkrechte auf dem Mittelpunkt des Kreises und damit die Drehachse 7 im Koordinatensystem der Oberflächentopographie bestimmt werden.
   1.3 Verfahrensschritt (h3): Herstellen eines räumlichen Bezugs zwischen dem Objekt 1 und dem Laserinterferometer 2:
      Der Drehtisch 10 wird in eine Drehwinkelposition φ gefahren, an der zuvor ein digitales Bild zur Bestimmung der Oberflächentopographie aufgenommen wurde und dadurch die Lage der Kamera 9 relativ zur Oberflächentopographie bzw. zum Objekt 1 bekannt ist.
      Durch Verwendung der Strahlrichteinheit 22 des Laserinterferometers 2 wird der Messstrahl 13 auf das Objekt 1 gerichtet. Mit der Kamera 9 wird ein digitales Bild aufgenommen. Vorteilhaft wird dabei die Verschlusszeit und ggf. die Blende der Kamera 9 so gewählt, dass nur der Auftreffpunkt des Messstrahls 13 (Laserfleck) auf dem Objekt 1 deutlich sichtbar ist, alle anderen Bildinhalte werden unterbelichtet. Die Position des Laserflecks wird z.B. durch die Bestimmung des Schwerpunkts der belichteten Pixel des digitalen Bildes unter Berücksichtigung der Helligkeit der Pixel bestimmt.
      Durch die Photogrammmetrie (und die bekannte oder einer während des Prozesses der Photogrammmetrie durchgeführte Kalibrierung der Kamera 9) ist der Verlauf eines Sichtstrahls von der Kamera 9 durch den Schwerpunkt des Laserflecks im aufgenommenen Bild relativ zur Oberflächentopographie bekannt. Für diesen Sichtstrahl wird der Schnittpunkt mit der Oberflächentopographie im Koordinatensystem der Oberflächentopographie bzw. des Objekts 1 bestimmt.
      Durch die Ablenkwinkel ψ₁, ψ₂ der Strahlrichteinheit 22 ist der Strahlverlauf des Messstrahls 13 relativ zum Laserinterferometer 2 bekannt. Des Weiteren ist dadurch ein Punkt auf dem Strahlverlauf des Messstrahls 13 im Koordinatensystem der Oberflächentopographie bzw. des Objekts 1 bekannt. Dieser Vorgang wird für mindestens drei - vorteilhaft deutlich mehr - weitere Richtungen der Strahlrichteinheit 22 des Laserinterferometers 2 durchgeführt.
      Durch eine Anpassung wird aus diesen Informationen die Lage des Laserinterferometers 2 relativ zur Oberflächentopographie bzw. zum Objekt 1 bestimmt. Vorteilhaft zur Erhöhung der Genauigkeit und der Robustheit wird der Vorgang an mehreren Drehwinkelpositionen φₓ des Drehtischs 10 wiederholt und die jeweils bestimmten Lagen des Laserinterferometers 2 gemittelt.
2. Verfahren unter Verwendung des Abgleichobjekts 23:
   2.1. Verfahrensschritt (h1): Herstellen eines räumlichen Bezugs zwischen dem Laserinterferometer 2 und der Drehachse 7 der Drehvorrichtung 4:
      Ein Abgleichobjekt 23 mit Markierungen 24, deren Position im Koordinatensystem 25 des Abgleichobjekts 23 bekannt sind, wird auf dem Drehtisch 10 so positioniert, dass es Drehbewegungen des Drehtisches 10 unverrückt mitmacht und an der aktuellen Drehwinkelposition φ des Drehtisches 10 vom Messstrahl 13 des Laserinterferometers 2 an mehreren Punkten getroffen werden kann. Vorteilhaft ist eine Ausrichtung in etwa senkrecht zur Hauptrichtung des Messtrahls 13 des Laserinterferometers 2.
      Eine Kamera 9 wird frei relativ zum Abgleichobjekt 23 und zum Drehtisch 10 positioniert, mit Sicht auf das Abgleichobjekt 23. Diese Kamera 9 kann im Laserinterferometer 2 verbaut sein. Mit der Kamera 9 wird ein digitales Bild aufgenommen. Die Positionen der Markierungen 24 werden im Bild bestimmt und ein Modell der Kamera 9 erstellt, das es erlaubt, jedem Pixel eines Bildes der Kamera 9 eine Koordinate im Koordinatensystem des Abgleichobjekts 23 zuzuordnen.
      Der Messstrahl 13 des Laserinterferometers 2 wird auf das Abgleichobjekt 23 gerichtet. Durch die Ablenkwinkel ψ₁, ψ₂ der Strahlrichteinheit 22 ist der Strahlverlauf des Messstrahls 13 relativ zum Laserinterferometer 2 bekannt.
      Mit der Kamera 9 wird ein digitales Bild aufgenommen. Vorteilhaft wird dabei die Verschlusszeit und ggf. die Blende der Kamera 9 so gewählt, dass nur der Auftreffpunkt des Messstrahls 13 (Laserfleck) auf dem Objekt 1 deutlich sichtbar ist, alle anderen Pixel sind dunkel. Die Position des Laserflecks wird z.B. durch die Bestimmung des Schwerpunkts der belichteten Pixel unter Berücksichtigung der Helligkeit der Pixel bestimmt; alternativ ist auch eine Benutzereingabe, beispielsweise an einem Videobild, zur Bestimmung der belichteten Pixel möglich. Dadurch sind die Koordinaten des Laserflecks im Koordinatensystem 25 des Abgleichobjekts 23 dann bekannt. Dieser Vorgang wird für mindestens drei weitere Richtungen der Strahlrichteinheit 22 des Laserinterferometers 2 durchgeführt.
      Durch eine Anpassung wird aus diesen Informationen eine erste Lage des Laserinterferometers 2 relativ zum Abgleichobjekt 23 bestimmt. Dieser Vorgang wird an mindestens einer weiteren Drehwinkelposition φ des Drehtisches 10 wiederholt, dadurch wird eine zweite Lage des Laserinterferometers 2 relativ zum Abgleichobjekt 23 bestimmt.
      Es wird eine Transformation der Koordinaten von der ersten Lage nach der zweiten Lage bestimmt, z.B. eine Rotation und Translation. Aus dieser Transformation wird die Lage der Drehachse 7 im Koordinatensystem des Abgleichobjekts 23 bestimmt.
      Die Lage des Interferometers 2 ist ebenfalls im Koordinatensystem 25 des Abgleichobjekts 23 bekannt und dadurch wurde der Bezug des Laserinterferometers 2 zur Lage der Drehachse 7 hergestellt.
      Vorteilhaft zur Erhöhung der Genauigkeit und der Robustheit wird der Vorgang an mehreren Drehwinkelpositionen φₓ des Drehtischs 10 wiederholt und die jeweils bestimmten Lagen der Drehachse 7 gemittelt.
   2.2. Verfahrensschritt (h2): Herstellen eines räumlichen Bezugs zwischen der Drehachse 7 und dem Objekt 1:
      Es werden nur die Verfahrensschritte (h1) und (h3) durchgeführt. Der Bezug zwischen der Drehachse 7 und dem Objekt 1 kann über zwei Schritte hergestellt werden. Zunächst wird das Laserinterferometer 2 auf die Drehachse 7 bezogen, und dann das Objekt 1 auf das Laserinterferometer 2.
   2.3. Verfahrensschritt (h3): Herstellen eines räumlichen Bezugs zwischen dem Objekt 1 und dem Laserinterferometer 2:
      Der Messstrahl 13 des Laserinterferometers 2 wird auf einen markanten Punkt der Oberfläche des Objekts 1 gerichtet, beispielsweise durch eine Benutzereingabe. Durch die Ablenkwinkel ψ₁, ψ₂ der Strahlrichteinheit 22 ist der Strahlverlauf des Messstrahls 13 relativ zum Laserinterferometer 2 bekannt.
      Der Laserfleck auf der Oberfläche des Objekts 1 wird dem entsprechenden Punkt der Oberflächentopographie des Objekts (bekannt z.B. durch CAD- bzw. FE-Modell, Photogrammmetrie, 3D-Scan) zugeordnet. Dadurch sind die Koordinaten des Auftreffpunkts des Messtrahls 13 auf der Oberfläche des Objekts 1 relativ zum Objekt 1 bekannt. Dieser Vorgang wird für mindestens drei weitere Richtungen der Strahlrichteinheit 22 des Laserinterferometers 2 durchgeführt.
      Durch eine Anpassung wird aus diesen Informationen die Lage des Laserinterferometers 2 relativ zum Objekt 1 bestimmt.
3. Gemeinsame Verfahrensschritte für beide unter 1. und 2. beschriebene Verfahrensweisen:
   - Auswahl der Messpunkte 14 aus der Oberflächentopographie des Objekts 1.
   - Zuordnung der Messpunkte 14 zu geeigneten Drehwinkelpositionen φₓ des Drehtisches 10. Dabei wird jeweils für die gegebene Drehwinkelposition φₓ der Strahlverlauf des Messstrahls 13 des Laserinterferometers 2 relativ zum Objekt 1 berechnet. Dazu wird die Lage des Laserinterferometers 2 relativ zum Objekt 1 berechnet. Dabei wird die Lage der Drehachse 7 relativ zum Objekt 1 verwendet, um eine Transformation der Lage des Laserinterferometers 2 für die Drehwinkelposition φₓ zu berechnen. Der Auftreffwinkel relativ zur Oberflächennormalen des Objekts 1 wird bestimmt. Es wird bestimmt, ob der Strahlverlauf durch andere Teile der Oberflächentopographie des Objekts 1 blockiert ist. Vorteilhaft ist hierbei, dass der Benutzer die Zuordnung prüfen und ändern kann, falls die Information (Topografie), mit der die Software rechnet, unvollständig oder zu grob ist.
   - Vorteilhaft wird ein Messpunkt 14 mehreren Drehwinkelpositionen φₓ des Drehtisches 10 zugeordnet.
   - Mindestens die Drehwinkelpositionen φₓ des Drehtisches 10, für die zugeordnete Messpunkte 14 vorliegen, werden angefahren.
   - Über die Strahlrichteinheit 22 wird der Messstrahl 13 auf die dieser Drehwinkelposition φₓ zugeordneten Messpunkte 14 gerichtet. Vorteilhaft ist eine Überprüfung der Positionierung im Kamerabild. Diese kann automatisch erfolgen, indem die Position des Laserstrahls im Videobild wie oben beschrieben ermittelt wird. Bei mehr als einem Laserinterferometer erfolgt dies nacheinander. Nur wenn alle Laserstrahlen am Ziel sind, wird gemessen, ansonsten wird dieser Messpunkt an einer anderen Drehwinkelposition wiederholt.
   - Die Schwingungsdaten werden vom Laserinterferometer 2 erfasst und dem jeweiligen Messpunkt 14 zugeordnet.
   - Falls bereits Schwingungsdaten für diesen Messpunkt 14 vorliegen, die an einer anderen Drehwinkelposition φ_{y} gemessen wurden, wird vorteilhaft die Signalqualität der Messungen bewertet und die beste Messung dem Messpunkt 14 zugeordnet.

### Bezugszeichenliste:

- 1: Objekt
- 2: Laserinterferometer
- 2.1: Messkopf
- 2.2: Messkopf
- 2.3: Messkopf
- 3: Messhalterung
- 4: Drehvorrichtung
- 5: Halterung
- 6: Antriebsmotor
- 7: Drehachse
- 8: Encoder
- 9: Kamera
- 10: Drehtisch
- 11: Abgleichmarkierung
- 12: Steuereinheit
- 13: Messstrahl
- 14: Messpunkte
- 15: Schwingungserreger
- 16: Auswerteeinheit
- 17: Ausgabeeinheit
- 18: Display
- 19: objektbezogenes Koordinatensystem
- 20: Spiegel ψ₁
- 21: Spiegel ψ₂
- 22: Strahlrichteinheit
- 23: Abgleichobjekt
- 24: Markierungen (auf 23)
- 25: Koordinatensystem des Abgleichobjekts
- φ: Drehwinkel
- ψ: Ablenkwinkel
- α: Winkel Messstrahl/Drehachse
- β: Winkel Messstrahl/Messstrahl

## Patentansprüche

1. Verfahren zur berührungslosen Schwingungsmessung eines Objektes mit folgenden Verfahrensschritten:
(a) Positionieren des Objekts auf einer Halterung,
(b) Festlegen einer Mehrzahl von Messpunkten auf dem Objekt,
(c) Bereitstellen mindestens eines Laserinterferometers, dessen Messstrahl oder dessen mehrere Messstrahlen mittels jeweils einer Strahlrichteinheit in ihrer Richtung verändert werden können,
(d) sukzessives Richten des mindestens einen Messstrahls auf die Messpunkte mittels der Strahlrichteinheit und Erfassen von Schwingungsdaten durch Überlagerung des vom Objekt zurückreflektierten oder zurückgestreuten Messstrahls mit einem Referenzstrahl des Laserinterferometers,
(e) Zuordnen der Schwingungsdaten zu den Messpunkten und Auswerten der Schwingungsdaten,
(f) Ausgeben der ausgewerteten Schwingungsdaten in Korrelation zu den Messpunkten, vorzugsweise in einem objektbezogenen Koordinatensystem, **dadurch gekennzeichnet, dass**
(g) das Objekt im Verfahrensschritt (a) auf einer als Drehvorrichtung ausgestalteten Halterung positioniert wird, die um eine Drehachse drehbar ist,
(h) vor dem Verfahrensschritt (d) ein räumlicher Bezug zwischen dem Laserinterferometer, der Drehachse und dem Objekt durch mindestens zwei der folgenden drei Verfahrensschritte hergestellt wird:
(h1) Herstellen eines räumlichen Bezugs zwischen dem Laserinterferometer und der Drehachse der Drehvorrichtung,
(h2) Herstellen eines räumlichen Bezugs zwischen der Drehachse und dem Objekt,
(h3) Herstellen eines räumlichen Bezugs zwischen dem Objekt und dem Laserinterferometer,
(i) im Verfahrensschritt (d) die Drehvorrichtung mindestens einmal um einen vorgegebenen oder durch Winkelmessung erfassten Drehwinkel φ um die Drehachse gedreht wird.

2. Verfahren nach Anspruch 1,
wobei in den Verfahrensschritten (a) und (c) das Objekt und das Laserinterferometer so positioniert werden, dass durch Drehen der Drehvorrichtung mehr Messpunkte vom Messtrahl oder den Messstrahlen erreicht werden können, als wenn das Objekt im Verfahrensschritt (d) nicht gedreht würde.

3. Verfahren nach einem der Ansprüche 1 oder 2,
wobei ein Laserinterferometer mit mindestens zwei, bevorzugt drei Messköpfen verwendet wird, deren Messstrahlen bei jedem Messpunkt einen Winkel β > 3°, bevorzugt β > 10° zwischen sich einschließen.

4. Verfahren nach mindestens einem der Ansprüche 1 bis 3,
wobei zum Herstellen eines räumlichen Bezugs zwischen dem Laserinterferometer und der Drehachse vor dem Verfahrensschritt (d) mindestens eine Abgleichmarkierung auf der Drehvorrichtung oder ein sich mit der Drehvorrichtung mitdrehendes Abgleichobjekt in mindestens zwei Drehwinkelstellungen φ₁, φ₂ der Drehvorrichtung verwendet wird,
wobei vorzugsweise mindestens eine Kamera und mindestens ein von dieser aufgenommenes digitales Bild der Drehvorrichtung oder des Abgleichobjekts zum Herstellen eines räumlichen Bezugs zwischen dem Laserinterferometer und der Drehachse verwendet wird.

5. Verfahren nach mindestens einem der Ansprüche 1 bis 4,
wobei zum Herstellen eines räumlichen Bezugs zwischen der Drehachse und dem Objekt vor dem Verfahrensschritt (d) mindestens eine Kamera und je mindestens ein von dieser aufgenommenes digitales Bild des Objekts in mindestens zwei verschiedenen Drehwinkelstellungen φ₁, φ₂ der Drehvorrichtung verwendet wird,
wobei vorzugsweise mindestens eine Kamera und mindestens ein von dieser aufgenommenes digitales Bild des Objekts zum Herstellen eines räumlichen Bezugs zwischen dem Objekt und dem Laserinterferometer vor dem Verfahrensschritt (d) verwendet wird.

6. Verfahren nach mindestens einem der Ansprüche 1 bis 5,
wobei zum Herstellen eines räumlichen Bezugs zwischen dem Objekt und dem Laserinterferometer vor dem Verfahrensschritt (d) eine Oberflächentopografie des Objekts ermittelt wird, die zumindest die Messpunkte umfasst, und hierzu Konstruktionsdaten des Objekts und/oder photogrammetrische Verfahren verwendet werden,
wobei die Oberflächentopografie insbesondere durch photogrammetrische Verfahren an mindestens zwei verschiedenen Drehwinkelstellungen φ₁, φ₂ der Drehvorrichtung ermittelt wird.

7. Verfahren nach mindestens einem der Ansprüche 1 bis 6,
wobei die Messpunkte im Verfahrensschritt (b) jeweils mindestens einer Drehwinkelstellung φₓ zugeordnet werden, in der diese Messpunkte vom mindestens einen Messstrahl erreichbar sind und vorzugsweise vom Messstrahl in einem Auftreffwinkel auf die Oberfläche des Objekts erreicht werden, der möglichst nahe der Oberflächennormalen liegt, sowie besonders bevorzugt nicht abgeschattet sind.

8. Vorrichtung zur berührungslosen Schwingungsmessung eines Objektes, insbesondere zur Durchführung eines Verfahrens nach mindestens einem der Ansprüche 1 bis 7, mit:
- einer Halterung zum Positionieren des Objekts,
- mindestens einem Laserinterferometer, dessen Messstrahl oder dessen mehrere Messstrahlen mittels jeweils einer Strahlrichteinheit in ihrer Richtung veränderbar sind, und das jeweils durch Überlagerung des von einem Messpunkt auf dem Objekt zurückreflektierten oder zurückgestreuten Messstrahls mit einem Referenzstrahl Schwingungsdaten an diesem Messpunkt erfasst,
- einer Steuereinheit, um den mindestens einen Messstrahl mittels der Strahlrichteinheit sukzessive auf eine Mehrzahl von vorab festgelegten Messpunkten auf dem Objekt zu richten,
- einer Auswerteeinheit, um die Messpunkte festzulegen, die Schwingungsdaten aus dem Laserinterferometer den Messpunkten zuzuordnen und die Schwingungsdaten auszuwerten, wobei die Auswerteeinheit mit der Steuereinheit zusammenwirkend ausgebildet ist,
- einer Ausgabeeinheit, um die ausgewerteten Schwingungsdaten in Korrelation zu den Messpunkten vorzugsweise in einem objektbezogenen Koordinatensystem auszugeben,
**dadurch gekennzeichnet, dass**
- die Halterung eine Drehvorrichtung ist, die um eine Drehachse drehbar ist,
- und die Steuereinheit außerdem dazu ausgebildet ist, die Drehvorrichtung mindestens einmal um einen vorgegebenen Drehwinkel φ motorisch um die Drehachse zu drehen, oder eine solche Drehung durch Winkelmessung zu erfassen, wonach sie den mindestens einen Messstrahl wiederum sukzessive auf eine Mehrzahl von vorab festgelegten Messpunkten auf dem Objekt richtet.

9. Vorrichtung nach Anspruch 8,
wobei die Auswerteeinheit so ausgebildet ist, dass sie für die Festlegung der Messpunkte und/oder die Zuordnung der Schwingungsdaten zu den Messpunkten einen räumlichen Bezug zwischen dem Laserinterferometer, der Drehachse und dem Objekt durch mindestens zwei der folgenden drei Maßnahmen herstellt:
- Herstellen eines räumlichen Bezugs zwischen dem Laserinterferometer und der Drehachse,
- Herstellen eines räumlichen Bezugs zwischen der Drehachse und dem Objekt,
- Herstellen eines räumlichen Bezugs zwischen dem Objekt und dem Laserinterferometer.

10. Vorrichtung nach einem der Ansprüche 8 oder 9,
wobei das Laserinterferometer mindestens zwei, bevorzugt drei Messköpfe umfasst, deren Messstrahlen bei jedem Messpunkt einen Winkel β > 3°, bevorzugt β > 10° zwischen sich einschließen.

11. Vorrichtung nach mindestens einem der Ansprüche 8 bis 10,
wobei zum Herstellen eines räumlichen Bezugs zwischen dem Laserinterferometer und der Drehachse die Drehvorrichtung mindestens eine Abgleichmarkierung aufweist und/oder ein sich mit der Drehvorrichtung mitdrehendes Abgleichobjekt vorgesehen ist,
wobei vorzugsweise mindestens eine Kamera zum Aufnehmen mindestens eines digitalen Bildes der Drehvorrichtung oder des Abgleichobjekts in mindestens zwei Drehwinkelstellungen φ₁, φ₂ der Drehvorrichtung vorgesehen ist, und/oder wobei das Abgleichobjekt insbesondere ein frei auf der Drehvorrichtung positionierbarer, vorzugsweise mit Abgleichmarkierungen versehener Gegenstand ist.

12. Vorrichtung nach mindestens einem der Ansprüche 8 bis 11,
wobei zum Herstellen eines räumlichen Bezugs zwischen dem Laserinterferometer und dem Objekt und/oder zum Herstellen eines räumlichen Bezugs zwischen dem Objekt und der Drehachse mindestens eine Kamera zum Aufnehmen von digitalen Bildern des Objekts in mindestens zwei Drehwinkelstellungen φ₁, φ₂ der Drehvorrichtung vorgesehen ist.

13. Vorrichtung nach mindestens einem der Ansprüche 8 bis 12,
wobei die Auswerteeinheit dazu ausgebildet ist, eine Oberflächentopografie des Objekts zu ermitteln, die zumindest die Messpunkte umfasst, und hierzu Konstruktionsdaten des Objekts und/oder photogrammetrische Verfahren zu verwenden,
wobei die Auswerteeinheit vorzugsweise dazu ausgebildet ist, die Oberflächentopografie durch photogrammetrische Verfahren an mindestens zwei verschiedenen Drehwinkelstellungen φ₁, φ₂ der Drehvorrichtung zu ermitteln.

14. Vorrichtung nach mindestens einem der Ansprüche 8 bis 13,
wobei die Auswerteeinheit dazu ausgebildet ist, die Messpunkte jeweils mindestens einer Drehwinkelstellung φₓ zuzuordnen, in der diese Messpunkte vom Messstrahl oder von den mehreren Messstrahlen erreichbar sind und vorzugsweise vom Messstrahl oder den Messstrahlen in einem Auftreffwinkel auf die Oberfläche des Objekts erreicht werden, der möglichst nahe der Oberflächennormalen liegt, sowie besonders bevorzugt nicht abgeschattet sind.

15. Vorrichtung nach mindestens einem der Ansprüche 8 bis 14, wobei das Laserinterferometer auf einem frei positionierbaren Stativ sitzt.
